# EUROPEAN PATENT APPLICATION

(11) **EP 1 887 347 A1**
(43) Date of publication of application: **13.02.2008**
(21) Application number: 07100611.8
(22) Date of filing: 16.01.2007
(51) Int. Cl.: G01N 27/12

(54) **Gas sensor using carbon natotubes**

(30) Priority: 10.08.2006 KR 20060075811
(71) Applicant: Samsung Electronics Co., Ltd., Suwon-si Gyeonggi-do (KR)
(72) Inventor: Lee, Soo-suk c/o Samsung Advanced Inst. of Tech., Giheung-gu,Yongin-si Gyeonggi-do (KR); Jung, Sung-ouk c/o Samsung Advanced Inst. of Tech, Gyeonggi-do (KR); Lee, Hun-joo c/o Samsung Advanced Inst. of Tech., Gyeonggi-do (KR); Lee, In-ho c/o Samsung Advanced Inst. of Techn., Gyeonggi-do (KR); Yoo, Kyu-tae c/o Samsung Advanced Inst. of Techn., Gyeonggi-do (KR); Kim, Jae-ho Department of Biotechnology, Ajou Univ, Yeongtong-gu, Suwon-si Gyeonggi-do (KR)
(74) Representative: Zimmer, Franz-Josef

(57) **Abstract**

Provided is a gas sensor that uses carbon nanotubes. The gas sensor includes a substrate (110) having a plurality of through holes (150), electrodes (112a, 112b) formed on the substrate between the through holes, and carbon nanotubes (120) covering the through holes formed in the substrate between the electrodes.

## Description

### BACKGROUND OF THE INVENTION

### 1. Field of the Invention

The present invention relates to a gas sensor that uses carbon nanotubes, and more particularly, to a gas sensor that has improved sensitivity and recycle efficiency.

### 2. Description of the Related Art

While it is true that scientific developments have improved the quality of human life, the extensive and rapid destruction of nature caused by industrialization and environmental contamination due to increased energy consumption pose a great threat to human beings.

Accordingly, the development of a reliable and highly sensitive gas sensor that can detect and quantify different kinds of harmful gases that cause air contamination is needed. Presently, gas sensors are widely used in various fields such as industries (manufacturing industry, agricultural industry, livestock industry, office equipment industry, catering industry, ventilation industry), crime prevention (alcohol level check), environment (air contamination surveillance, combustion control), disaster prevention (gas leaking, oxygen deficient alarm in mines, fire surveillance), medical (gas analysis in blood, anesthesia gas analysis), etc., and applications for gas sensors are widening every day.

In general, a gas sensor measures the amount of a harmful gas by using the characteristics of a changing electrical conductivity or electrical resistance according to the degree of adsorption of gas molecules by the gas sensor. In the prior art, the gas sensor was manufactured using a metal oxide semiconductor, a solid electrolyte material, or other organic materials. However, the gas sensor that uses the metal oxide semiconductor or the solid electrolyte material starts a sensing operation when the gas sensor is heated to 200 - 600°C. The gas sensor that uses the organic material has a very low electrical conductivity, and the gas sensor that uses carbon black and an organic complex has a very low sensitivity.

Carbon nanotubes (CNTs) have recently drawn attention as a new materials that can be applied to various industrial fields due to their high electron emission characteristics and high chemical reactivity. In particular, the CNT is a material that has a very wide surface area as compared to the volume of the CNT. Therefore, the CNT is very useful in fields such as a detection of a minor chemical component and hydrogen storage. A gas sensor that uses CNTs detects harmful gases by measuring electrical signals (conductance, resistance) that vary according to the electron properties of a gas adsorbed to the CNTs. When the CNTs are used in the gas sensor, there are advantages in that a sensing operation can start at room temperature, and sensitivity and speed of response are very high since there is a high electrical conductivity when harmful gases such as NH₃ or NO₂ react with the CNTs in the gas sensor.

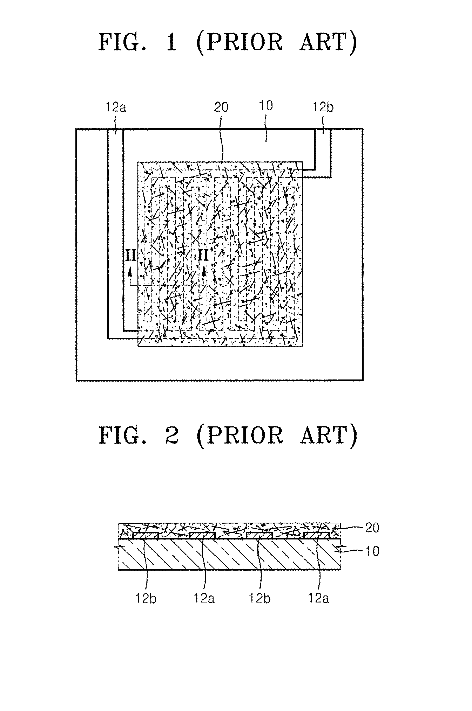

FIG. 1 illustrates a plan view of a conventional gas sensor that uses carbon nanotubes (CNTs), and FIG. 2 illustrates a cross-sectional view taken along line II-II' of the conventional gas sensor of FIG. 1.

Referring to FIGS. 1 and 2, first and second electrodes 12a and 12b are alternately formed on a substrate 10, and carbon nanotubes 20 covering the first and second electrodes 12a and 12b are coated on the substrate 10. In this structure, when a specific gas contacts the gas sensor, the carbon nanotubes 20 adsorb the gas, and accordingly, an electric signal between the first and second electrodes 12a and 12b varies, thereby detecting the specific gas. However, in the conventional gas sensor described above, the carbon nanotubes 20 on the substrate 10 are formed in a two dimensional structure. Therefore, the surface that can react with the gas cannot be maximized, and thus, the sensitivity of the conventional gas sensor cannot further be increased. Also, the gas adsorbed to the carbon nanotubes 20 must be removed in order to recycle the conventional gas sensor. As such, it is difficult to completely remove the adsorbed gas from the carbon nanotubes 20 formed in a two dimensional structure.

### SUMMARY OF THE INVENTION

The present invention provides a gas sensor that has high sensitivity and high recycle efficiency.

According to an aspect of the present invention, there is provided a gas sensor comprising: a substrate having a plurality of through holes; electrodes formed on the substrate between the through holes; and carbon nanotubes covering the through holes formed in the substrate between the electrodes.

The through holes may be formed by perforation perpendicular to the surface of the substrate. The through holes may be formed parallel to the electrodes.

The electrodes may comprise first and second electrodes, and the first and second electrodes may be alternately formed to interpose the through holes between the first and second electrodes.

The carbon nanotubes may be formed on the substrate to cover the electrodes.

The gas sensor may further comprise a material that selectively reacts with a specific gas to function as a filter for removing the specific gas.

### BRIEF DESCRIPTION OF THE DRAWINGS

The above and other features and advantages of the present invention will become more apparent by describing in detail exemplary embodiments thereof with reference to the attached drawings in which:
FIG. 1 illustrates a plan view of a conventional gas sensor that uses carbon nanotubes (CNTs);
FIG. 2 illustrates a cross-sectional view taken along line II-II' of the conventional gas sensor of FIG. 1;
FIG. 3 illustrates a plan view of a gas sensor according to an embodiment of the present invention;
FIG. 4 illustrates a cross-sectional view taken along line IV-IV' of the gas sensor of FIG. 3, according to an embodiment of the present invention;
FIG. 5 illustrates a perspective view of a substrate of the gas sensor of FIG. 3, according to an embodiment of the present invention;
FIG. 6 illustrates a perspective view of electrodes formed on the substrate of the gas sensor of FIG. 5, according to an embodiment of the present invention;
FIG. 7 illustrates an scanning electron microscope (SEM) image of a substrate of a gas sensor according to an embodiment of the present invention;
FIGS. 8A through 8C illustrate SEM images of carbon nanotubes formed on the substrate of FIG. 7, according to an embodiment of the present invention;
FIG. 9 is a graph illustrating measurement results of a gas sensed by a gas sensor according to an embodiment of the present invention; and
FIG. 10 is a graph illustrating measurement results of a recycled gas sensor according to an embodiment of the present invention.

### DETAILED DESCRIPTION OF THE INVENTION

The present invention will now be described more fully with reference to the accompanying drawings in which exemplary embodiments of the invention are shown. In the drawings, like reference numerals refer to the like elements and the thicknesses of layers and regions are exaggerated for clarity.

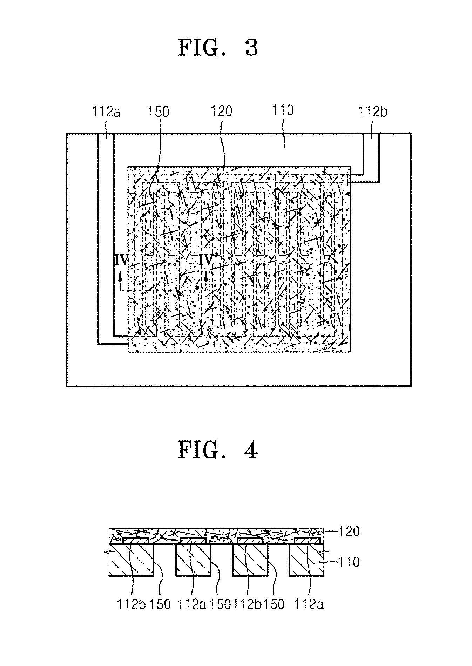

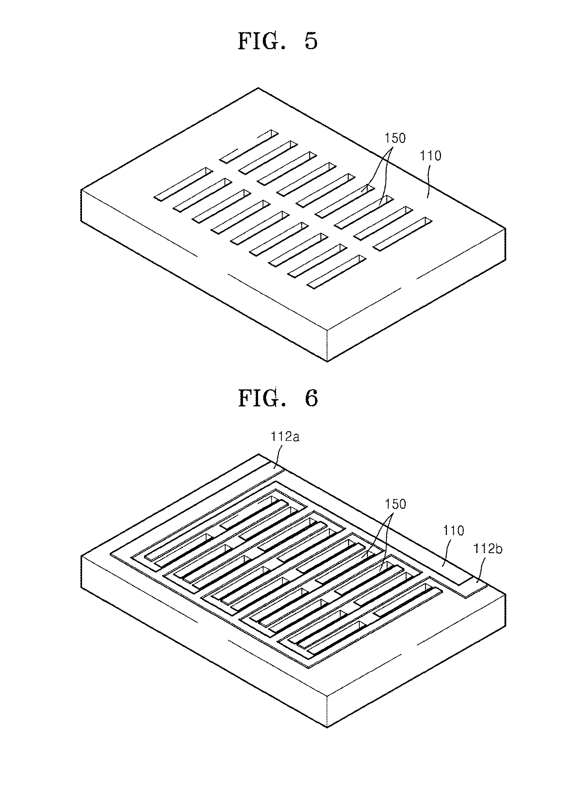

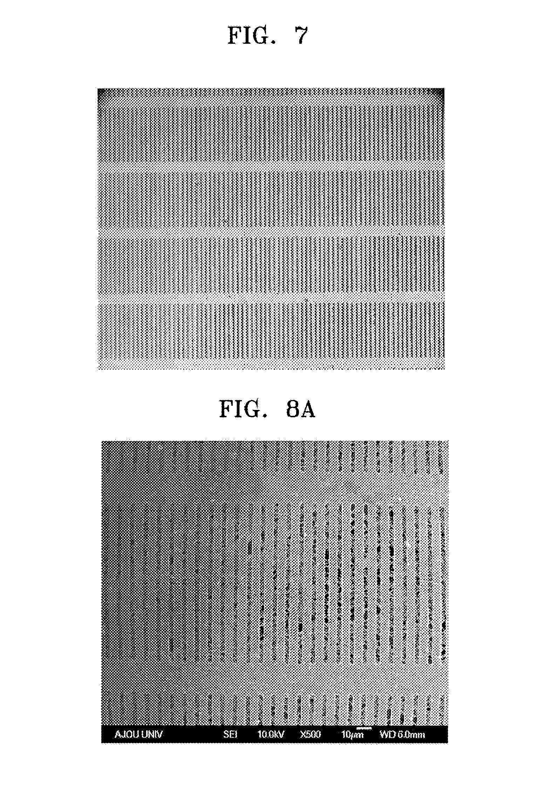

FIG. 3 illustrates a plan view illustrating a gas sensor according to an embodiment of the present invention. FIG. 4 illustrates a cross-sectional view taken along line IV-IV' of the gas sensor of FIG. 3, FIG. 5 illustrates a perspective view of a substrate of the gas sensor of FIG. 3, and FIG. 6 illustrates a perspective view of an electrode formed on the substrate of FIG. 5, according to an embodiment of the present invention.

Referring to FIGS. 3 through 6, electrodes 112a and 112b are formed on a substrate 110, and carbon nanotubes (CNTs) 120 covering the electrodes 112a and 112b are coated on the substrate 110. The substrate 110 can be a silicon wafer.

In the current embodiment, as depicted in FIG. 5, a plurality of through holes 150 are formed in the substrate 110. The through holes 150 may be formed by perforation perpendicular to the surface of the substrate 110, but the through holes 150 are not limited thereto, and can be slanted with respect to the surface of the substrate 110. Also, the through holes 150 can be formed parallel to the electrodes 112a and 112b. In FIG. 5, the through holes 150 are arranged in two rows, but the present invention is not limited thereto, that is, the through holes 150 can be formed in one row or a plurality of rows. Also, the through holes 150 can be formed in various shapes. FIG. 7 illustrates a scanning electron microscope (SEM) image of a substrate on which through holes similar to through holes 150 of FIG. 6 are formed, according to an embodiment of the present invention.

As depicted in FIG. 6, the electrodes 112a and 112b are deposited on the substrate 110 on which the through holes 150 are formed. The electrodes 112a and 112b can include a first electrode 112a and a second electrode 112b alternately formed to interpose the through holes 150 therebetween. The first and second electrodes 112a and 112b can be formed, for example, in an inter-digitated shape, and can be formed in various shapes. The first and second electrodes 112a and 112b may be formed of a material having high conductivity, for example, Au, Ti, etc, but the present invention is not limited thereto.

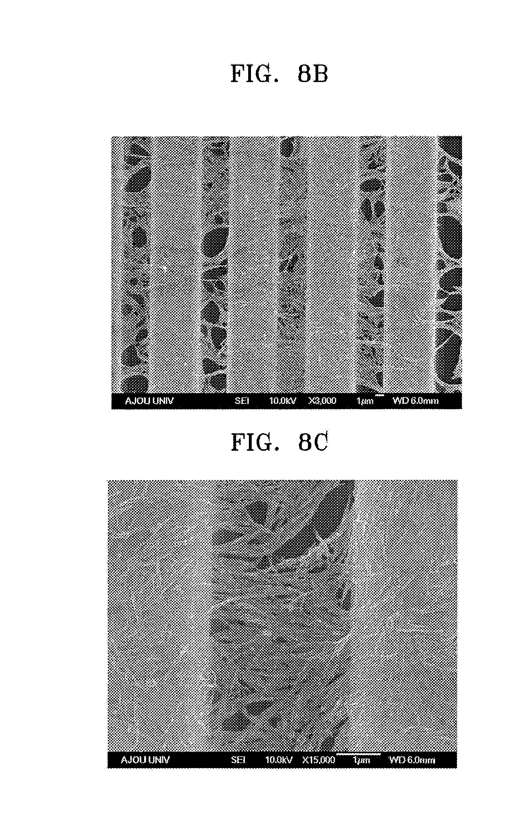

The CNTs 120 covering the through holes 150 are formed on the substrate 110 between the first and second electrodes 112a and 112b. Here, the CNTs 120 can be formed to cover the first and second electrodes 112a and 112b on the substrate 110. The CNTs 120 can be formed using a chemical vapor deposition (CVD) method, a method that uses a CNT paste, or a Langmuir-Blodgett (LB) method. More specifically, the CNTs 120 can be grown on the substrate 110 using the CVD method or can be formed by coating the CNT paste on the substrate 110. Also, the CNTs 120 can be formed by lifting the substrate 110 immersed in a solution in which CNTs are dispersed by using the LB method. FIG. 8A through 8C illustrate SEM images of CNTs 120 formed on the substrate 110 in which the through holes 150 are formed by using the LB method, and FIGS. 8B and 8C illustrate enlarged SEM images of the SEM image of FIG. 8A, according to an embodiment of the present invention. Referring to FIGS. 8A through 8C, the CNTs 120 are uniformly formed on the through holes 150.

As described above, in the current invention, the CNTs 120 are formed to cover the through holes 150 on the substrate 110 in which the through holes 150 are formed. Therefore, not only the upper surface of the CNTs 120 but also the lower surface of the CNTs 120 are exposed to the outside through the through holes 150. Accordingly, when a specific gas contacts the gas sensor according to the present invention, the specific gas can be adsorbed to not only on the upper surface of the CNTs 120, but also to the lower surface of the CNTs 120, and also, can be adsorbed by passing through the CNTs 120. In this way, in the gas sensor according to the present invention, since the CNTs 120 are formed in a three dimensional structure on the substrate 110 on which the through holes 150 are formed, the surface area of the CNTs 120 that can react with the gas can be maximized. Accordingly, the sensitivity of the gas sensor can further increase. Also, the CNTs 120 to which gases are adsorbed can be rapidly and effectively removed through the through holes 150, thereby increasing the re-usage efficiency of the gas sensor.

A gas sensor as described above can also function as a gas filter if a material (not shown) that can selectively adsorb a specific gas is used on the surface of the CNTs 120. For example, a gas that is composed of dichloroethylene, acetic acid, or propanoic acid can be adsorbed by Ag, and a gas that is composed of ethylene, benzene, or cyclohexane can be adsorbed by Ir. Also, a gas that is composed of methane or formic acid can be adsorbed by Mo, and a gas that is composed of methane, methanol, or benzene can be adsorbed by Ni. Furthermore, a gas that is composed of benzene, acetylene, ethylene, methanol, benzene+CO, methane can be adsorbed by Pd, and a gas that is composed of aniline, ammonia, cyanobenzene, m-xylene, naphthalene, N-butylbenzene, or acetonitrile can be adsorbed by Pt. Besides above, there are many metals that have adsorption selectivity with respect to a specific gas.

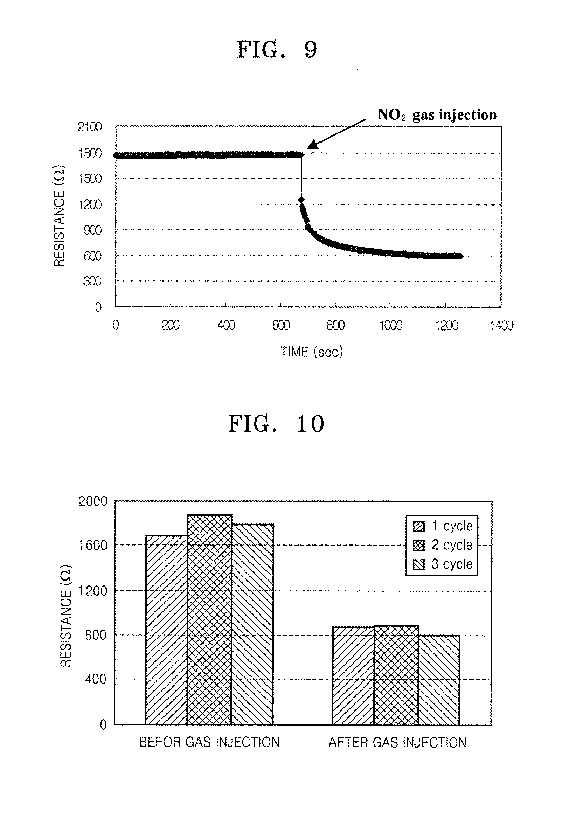

FIG. 9 is a graph illustrating the measurement result of a gas sensed by a gas sensor according to an embodiment of the present invention. FIG. 9 illustrates measurement results in terms of resistance of a gas sensor according to an embodiment of the present invention when 2.5 ppm of nitrogen dioxide (NO₂) was injected as a measuring gas. The conductance variation (ΔG = (Gᵢ - Go)/Go) of the gas sensor was calculated using the results depicted in FIG. 9. Here, Gᵢ indicates conductance after gas injection, and Go indicates initial conductance before gas injection. The gas sensor according to an embodiment of the present invention resulted in a conductance variation ΔG of approximately 1.11. The conventional gas sensor depicted in FIG. 1 resulted in a conductance variation ΔG of the approximately 0.80. From the calculation result, it can be seen that the gas sensor according to an embodiment of the present invention results in a sensitivity improvement of 39% as compared to a conventional gas sensor.

FIG. 10 is a graph illustrating the measurement results of a recycled gas sensor according to an embodiment of the present invention. FIG. 10 illustrates the measurement results of a gas sensor recycled three times by using 2.5 ppm of NO₂ gas. To recycle the gas sensor, ultraviolet rays were irradiated on the gas sensor and N₂ gas was introduced. Referring to FIG. 10, the gas sensor has nearly the same resistances in each cycle before the gas is injected, also has nearly the same resistances in each cycle after the gas was injected. From this result, it can be seen that the gas sensor according to an embodiment of the present invention has very high re-usage efficiency.

As described above, the surface area of CNTs can be maximized by forming CNTs on a substrate in which a plurality of through holes are formed. Therefore, the sensitivity of the gas sensor can greatly increase. Also, the CNTs to which gases are adsorbed can be rapidly and effectively removed from the substrate through the through holes formed in the substrate, thereby increasing the recycle efficiency.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A gas sensor comprising:
a substrate (110) having a plurality of through holes (150);
electrodes (112a, 112b) formed on the substrate (110) between the through holes (150); and
carbon nanotubes (120) covering the through holes (150) formed in the substrate (110) between the electrodes (112a, 112b).

2. The gas sensor of claim 1, wherein the through holes (150) are formed by perforation perpendicular to the surface of the substrate (110).

3. The gas sensor of claim 2, wherein the through holes (150) are formed parallel to the electrodes (112a, 112b).

4. The gas sensor of any of claims 1 to 3, wherein the electrodes (112a, 112b) comprise first and second electrodes.

5. The gas sensor of claim 4, wherein the first and second electrodes (112a, 112b) are alternately formed to interpose the through holes (150) between the first and second electrodes (112a, 112b).

6. The gas sensor of any of claims 1 to 5, wherein the carbon nanotubes (120) are formed on the substrate (110) to cover the electrodes (112a, 112b).

7. The gas sensor of claim 6, wherein the carbon nanotubes (120) are formed using a chemical vapor deposition method, a method that uses a carbon nanotube paste, or a Langmuir-Blodgett method.

8. The gas sensor of any of claims 1 to 7, wherein the substrate (110) is a silicon wafer.

9. The gas sensor of any of claims 1 to 8, wherein the electrodes (112a, 112b) are formed of Au or Ti.

10. The gas sensor of any of claims 1 to 9, wherein the gas sensor further comprises a material that selectively reacts with a specific gas to function as a filter for removing the specific gas.
